(19) 

Europäisches
Patentamt
European
Patent Office
Office européen
des brevets

(11) **EP 4 761 153 A1**

(12) **EUROPEAN PATENT APPLICATION**
published in accordance with Art. 153(4) EPC

(43) Date of publication:
**17.06.2026 Bulletin 2026/25**

(21) Application number: **24876049.8**

(22) Date of filing: **03.06.2024**

(51) International Patent Classification (IPC):
**H04L 1/00** (2006.01)

(86) International application number:
**PCT/CN2024/097084**

(87) International publication number:
**WO 2025/077223 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.10.2023 CN 202311300982**
**13.03.2024 CN 202410291171**

(71) Applicant: **HUAWEI TECHNOLOGIES CO., LTD.**
**Shenzhen 518129 (CN)**

(72) Inventors:
• **LIU, Xiaojian**
**Shenzhen, Guangdong 518129 (CN)**
• **PI, Bixing**
**Shenzhen, Guangdong 518129 (CN)**
• **LIU, Yan**
**Shenzhen, Guangdong 518129 (CN)**
• **WU, Dongxing**
**Shenzhen, Guangdong 518129 (CN)**
• **YANG, Bing**
**Shenzhen, Guangdong 518129 (CN)**
• **SHI, Xuan**
**Shenzhen, Guangdong 518129 (CN)**
• **WU, Kaijie**
**Shenzhen, Guangdong 518129 (CN)**
• **FENG, Shulan**
**Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **INTERFACE DATA TRANSMISSION METHOD AND COMMUNICATION APPARATUS**

(57) Embodiments of this application provide a data transmission method for an interface and a communication apparatus, and relate to the field of communication technologies, to improve bandwidth utilization of the interface. In this application, when a plurality of consecutive first data units are transmitted between interfaces, each first data unit in at least one first data unit includes n first data bits and a first bit, where n is an integer greater than or equal to 1. The first bit is located after the n first data bits in time domain, and a value of the first bit is opposite to a value of an $n^{th}$ first data bit in the n first data bits. Embodiments of this application are used for a data transmission between interfaces.

FIG. 6

# Description

This application claims priority to Chinese Patent Application No. 202311300982.1, filed with the China National Intellectual Property Administration on October 8, 2023 and entitled "DATA TRANSMISSION METHOD FOR INTERFACE AND COMMUNICATION APPARATUS", which is incorporated herein by reference in its entirety, and this application claims priority to Chinese Patent Application No. 202410291171.8, filed with the China National Intellectual Property Administration on March 13, 2024 and entitled "DATA TRANSMISSION METHOD FOR INTERFACE AND COMMUNICATION APPARATUS", which is incorporated herein by reference in its entirety.

## TECHNICAL FIELD

This application relates to the field of chip technologies, and in particular, to a data transmission method for an interface and a communication apparatus.

## BACKGROUND

Devices may be connected to each other through a cable, to implement a signal transmission between the devices, for example, an audio and video data transmission and charging. To meet various data transmission requirements, the industry defines specifications for interconnection interfaces that are used for signal transmissions between a plurality of types of devices. These interconnection interfaces generally include high-speed links used for service information transmissions and low-speed transmission links used for control information transmissions. When an interconnection interface accompanied by no associated clock is used for data transmissions, for example, when control information is transmitted, a deviation between a sending side and a receiving side of data in a data receiving and sampling process usually accumulates and increases due to reasons such as a clock frequency deviation or jitter. Consequently, the receiving side cannot perform correct sampling.

Sufficient signal flipping is required on a lane, to correct a sampling error on the receiving side. In a current implementation, when data is transmitted on an interconnection interface, bits of one symbol include a start bit (start bit), a data bit, and a stop bit (stop bit). The start bit indicates that a transmission of data carried on the symbol starts, and the stop bit indicates that the transmission of the data carried on the symbol is completed. In addition, in one symbol, signal flipping is implemented by using different levels of a start bit and a stop bit, and signal flipping between two symbols is implemented by using start bits and stop bits of different levels. It can be learned that, in this implementation, when the data carried on the symbol is transmitted through the interconnection interface, a transmission of the start bit and the stop bit further requires time, and bandwidth utilization of the interface is low.

## SUMMARY

Embodiments of this application provide a data transmission method for an interface and a communication apparatus, to improve bandwidth utilization of the interface.

To achieve the foregoing objective, the following technical solutions are used in embodiments of this application.

According to a first aspect, a data transmission method for an interface is provided, including: generating at least one first data unit, where the at least one first data unit is consecutive in time domain, each first data unit in the at least one first data unit includes n first data bits and a first bit, n is an integer greater than or equal to 1, the first bit is located after the n first data bits in time domain, and a value of the first bit is opposite to a value of an $n^{th}$ first data bit in the n first data bits; and sending at least one first data unit.

Embodiments of this application may be applied to a scenario in which devices are directly connected to each other, or a scenario in which a plurality of devices are connected through an intermediate routing device for networking, and may be executed by an electronic device or an interface device. When the electronic device is used for execution, the electronic device includes an interface apparatus. For example, the interface apparatus is an interface chip, and the interface chip may adapt to source data generated by the electronic device, to obtain a plurality of first data units, and send the plurality of first data units. When the interface device includes the interface apparatus, the interface apparatus may be integrated inside the interface device or may be sold as an independent module.

Embodiments of this application may be applied to a signal transmission between interfaces of devices.

In this embodiment of this application, when the data unit is a symbol, the first data unit is denoted as a first symbol.

Therefore, when a signal is transmitted between the interfaces, because a deviation may accumulate and increase in a data receiving and sampling process due to reasons such as a clock frequency deviation or jitter when there is no associated clock accompanying, a receiving side cannot perform correct sampling. In this case, sampling correction may be performed through signal flipping. In this application, when a plurality of consecutive first symbols are transmitted, each first symbol includes n first data bits and 1 first bit. When a value of the first bit is opposite to a value of an $n^{th}$ first data bit in the n first data bits, the first bit is a flip bit, and is used to implement signal flipping. In this way, bandwidth utilization during the signal transmission between the interfaces is (n/(n+1)). In comparison, in the conventional technology, each symbol includes a start bit, a data bit, and a stop bit. It is assumed that when there are n data bits, bandwidth utilization of an interface is (n/(n+2)). The bandwidth utilization of this application is higher. In this way, there are sufficient bits on a link for signal flipping, helping a receiving side correct a sampling error. In addition, the bandwidth utilization is improved.

The bandwidth utilization may be understood as a ratio of valid data bits transmitted in a period of time. A period of time may be understood as a plurality of clock cycles for transmitting one data unit. When transmission duration of each bit is one clock cycle, (n+1) clock cycles are required for transmitting (n+1) bits, and valid data bits are n first data bits. In this case, bandwidth utilization is n/(n+1).

In a possible design, the method further includes: generating a second data unit; and sending the second data unit, where the second data unit is located after the at least one first data unit in time domain, the second data unit includes n second data bits and a second bit, the second bit is located after the n second data bits in time domain, and a value of the second bit is the same as a value of an $n^{th}$ second data bit in the n second data bits.

In this way, for one burst transmission, when the transmitted second data unit is used as a last data unit in time domain, it is equivalent to that the value of the second bit in the second data unit is the same as the value of the $n^{th}$ second data bit in the n second data bits, to indicate that the burst transmission ends. The second data unit is still similar to the first data unit, and includes n data bits and one second bit that indicates an end of a burst. Bandwidth utilization of the link between the interfaces during the transmission of the second data unit may also be improved to n/(n+1).

In a possible design, after the second data unit is sent, an idle state is recovered. In other words, after receiving of the burst transmission ends, the lane may recover to the idle state.

In a possible design, both the at least one first data unit and the second data unit are data units belonging to the burst transmission. In comparison with the conventional technology in which 2 flip bits are required for transmitting each symbol, in this application, only the last bit of each data unit in time domain is required to implement signal flipping or indicate that the burst transmission ends. In this way, in the burst transmission, for the at least one first data unit and the second data unit that are transmitted, bandwidth utilization during a transmission of each data unit is high.

In a possible design, the method further includes: generating a third data unit; and sending the third data unit, where the third data unit is located before the at least one first data unit in time domain and indicates that the burst transmission starts, the third data unit includes (n+1) third bits and a fourth bit, the fourth bit is located after the (n+1) third bits in time domain, and a value of the fourth bit is opposite to values of the (n+1) third bits.

This is equivalent to that the third data unit is (n+2) bits, and the fourth bit is an $(n+2)^{th}$ bit of the third data unit. Optionally, the values of the (n+1) third bits are opposite to a value of a bit indicating the idle state, and the value of the fourth bit is the same as the value of the bit indicating the idle state. For example, if the value of the bit indicating the idle state is 1, the third data unit includes (n+1) bits 0 and 1 bit 1. If the bit indicating the idle state is 0, the third data unit includes (n+1) bits 1 and 1 bit 0. If a level of a lane of a link in the idle state is a high level, the third data unit includes a low level in (n+1) clock cycles and a high level in one clock cycle. Alternatively, if a level of a lane of a link in the idle state is a low level, the third data unit includes a high level in (n+1) clock cycles and a low level in one clock cycle. In comparison, in the conventional technology, 1 flip bit at a level opposite to a level of the idle state indicates a start of one burst transmission, and the receiving side may incorrectly determine the start of the burst transmission due to reasons such as disturbance. In this application, the third data unit whose duration is the same as duration of the first data unit indicates the start of the burst transmission, so that a timing error of the start of the transmission on the receiving side can be avoided, and more time may be used for error recovery and low power consumption wake-up.

In a possible design, both the first data unit and the third data unit are data units belonging to the burst transmission. In this way, not only bandwidth utilization can be high when the at least one first data unit is transmitted on the link, but also the receiving side can perform timing on the start of the transmission by using the third data unit, to avoid an error.

In a possible design, the method further includes: generating a fourth data unit; and sending the fourth data unit, where the fourth data unit includes a fifth bit, the fourth data unit is located before the at least one first data unit in time domain and indicates that the burst transmission starts, a value of the fifth bit is opposite to the value of the bit indicating the idle state, and the at least one first data unit is a data unit belonging to the burst transmission.

In this way, for the start of the burst transmission, when the level of the idle state is a low level before the burst transmission starts, signal flipping may be implemented by using a level of the fifth bit as a high level, to indicate the start of the burst transmission. When the level of the idle state is a high level before the burst transmission starts, signal flipping may be implemented by using a level of the fifth bit as a low level, to indicate the start of the burst transmission. In addition, in the burst transmission, bandwidth utilization during the transmission of the at least one first data unit is high.

According to a second aspect, a data transmission method for an interface is provided, including: receiving at least one first data unit, where the at least one first data unit is consecutive in time domain, each first data unit in the at least one first data unit includes n first data bits and a first bit, n is an integer greater than or equal to 1, the first bit is located after the n first data bits in time domain, and a value of the first bit is opposite to a value of an $n^{th}$ first data bit in the n first data bits; and processing the at least one first data unit to obtain first data.

For beneficial effect of the second aspect, refer to the descriptions of the first aspect.

In addition, when a receiving side processes the at least one first data unit to obtain the first data, because a last bit of each first data unit in time domain, namely, the first bit, is a flip bit of a previous bit of the first bit in time domain, valid first data obtained by the receiving side includes data of the n first data bits in each first data unit.

In a possible design, the method further includes: receiving a second data unit, where the second data unit is located after the at least one first data unit in time domain and indicates that one burst transmission ends, the second data unit includes n second data bits and a second bit, the second bit is located after the n second data bits in time domain, and a value of the second bit is the same as a value of an $n^{th}$ second data bit in the n second data bits; and processing the second data unit to obtain second data.

Similar to that in the second aspect, the second data includes the data of the n first data bits in each first data unit and data of the n second data bits in the second data unit.

In a possible design, the first data and the second data are data belonging to the burst transmission. In other words, when the second data unit is used as a last data unit of the burst transmission in time domain, when receiving of the second data unit is completed, data obtained by the receiving side in the burst transmission includes the first data obtained from the at least one first data unit and the second data obtained from the second data unit.

In a possible design, before receiving the at least one first data unit, the method further includes: receiving a third data unit, where the third data unit is located before the at least one first data unit in time domain and indicates that the burst transmission starts, the third data unit includes (n+1) third bits and a fourth bit, the fourth bit is located after the (n+1) third bits in time domain, and a value of the fourth bit is opposite to values of the (n+1) third bits.

In a possible design, the values of the (n+1) third bits are opposite to a value of a bit indicating an idle state, and the value of the fourth bit is the same as the value of the bit indicating the idle state. The third data unit is processed to obtain third data.

Because the third data unit is not used to carry valid data, when receiving the third data unit, the receiving side identifies only the start of the burst transmission by using the third data unit. When a signal in the idle state is at a high level, the third data is only a low-level signal of (n+1) clocks and a high-level signal of one clock; or when a signal in the idle state is at a low level, the third data is only a high-level signal of (n+1) clocks and a low-level signal of one clock, but there is no valid data in the third data unit.

In addition, for the receiving side, in comparison with the conventional technology in which 1 start bit indicates a start of one burst transmission, disturbance is likely to occur, and therefore the receiving side incorrectly determines the start of the burst transmission, in this application, the third data unit whose transmission duration is the same as transmission duration of the first data unit indicates the start of the burst transmission, so that incorrect determining of the start of the burst transmission on the receiving side due to reasons such as disturbance can be avoided, thereby avoiding a timing error, and more time may be used for error recovery and low power consumption wake-up.

In a possible design, the receiving side detects a level of a lane in the idle state, and uses time of the third data unit as low power consumption wake-up time when a level change is detected.

In a possible design, the first data and the third data are data belonging to the burst transmission. For the receiving side, the first data includes the data of the n first data bits in each first data unit. There is no valid data in the third data.

In a possible design, the method further includes: receiving a fourth data unit, where the fourth data unit includes a fifth bit, the fourth data unit is located before the at least one first data unit in time domain and indicates that the burst transmission starts, a value of the fifth bit is opposite to the value of the bit indicating the idle state, and the at least one first data unit is a data unit belonging to the burst transmission.

The fifth bit may also be referred to as a start bit. The receiving side may identify, based on the fifth bit, that the burst transmission starts, and perform timing on the burst transmission, to improve data transmission reliability.

According to a third aspect, an interface apparatus is provided. The interface apparatus includes: a processing module, configured to generate at least one first data unit, where the at least one first data unit is consecutive in time domain, each first data unit in the at least one first data unit includes n first data bits and a first bit, n is an integer greater than or equal to 1, the first bit is located after the n first data bits in time domain, and a value of the first bit is opposite to a value of an $n^{th}$ first data bit in the n first data bits; and a sending module, configured to send at least one first data unit.

According to a fourth aspect, an interface apparatus is provided. The interface apparatus includes: a receiving module, configured to receive at least one first data unit, where the at least one first data unit is consecutive in time domain, each first data unit in the at least one first data unit includes n first data bits and a first bit, n is an integer greater than or equal to 1, the first bit is located after the n first data bits in time domain, and a value of the first bit is opposite to a value of an $n^{th}$ first data bit in the n first data bits; and a processing module, configured to process the at least one first data unit to obtain first data.

According to a fifth aspect, an interface apparatus is provided, including a module configured to perform the method according to any one of the first aspect and the designs of the first aspect or any one of the second aspect and the designs of the second aspect.

According to a sixth aspect, an interface apparatus is provided. The interface apparatus includes a processor and a memory, the memory is configured to store computer-executable instructions, and when the computer-executable instructions are run by the processor, the method according to any one of the first aspect and the designs of the first aspect or any one of the second aspect and the designs of the second aspect is performed.

According to a seventh aspect, a computer-readable storage medium is provided. The computer-readable storage medium stores computer instructions. When the computer instructions are run on an interface apparatus, the interface apparatus is enabled to perform the method according to any one of the first aspect and the designs of the first aspect or any one of the second aspect and the designs of the second aspect.

According to an eighth aspect, a computer program product is provided, including computer instructions. When the computer instructions are run on an interface apparatus, the interface apparatus is enabled to perform the method according to any one of the first aspect and the designs of the first aspect or any one of the second aspect and the designs of the second aspect.

According to a ninth aspect, an electronic device is provided. The electronic device includes the interface apparatus in the fifth aspect and/or the sixth aspect.

According to a tenth aspect, a chip is provided. The chip includes the interface apparatus in the fifth aspect and/or the sixth aspect.

It may be understood that any electronic device, interface apparatus, chip, computer-readable storage medium, computer program product, or the like provided above may be applied to the corresponding method provided above. Therefore, for beneficial effect that can be achieved by the electronic device, the interface apparatus, the chip, the computer readable storage medium, or the computer program product, refer to beneficial effect in the corresponding method. Details are not described herein again.

These aspects or other aspects in this application are more concise and comprehensible in the following descriptions.

**BRIEF DESCRIPTION OF DRAWINGS**

FIG. 1A and FIG. 1B are diagrams of an architecture of a communication system in which devices are directly connected to each other according to an embodiment of this application;
FIG. 2 is a diagram of basic components of an electronic device according to an embodiment of this application;
FIG. 3 is a diagram of an inter-interface transmission according to an embodiment of this application;
FIG. 4 is a diagram of transmitting a plurality of data bits according to an embodiment of this application;
FIG. 5 is a diagram of a symbol transmission in which a sideband link corrects a sampling error through signal flipping according to an embodiment of this application;
FIG. 6 is a flowchart of a symbol transmission in which a sampling error is corrected through signal flipping according to an embodiment of this application;
FIG. 7 is a diagram of transmitting a plurality of symbols according to an embodiment of this application;
FIG. 8 is a signal interaction flowchart of a data transmission method for an interface according to an embodiment of this application;
FIG. 9A and FIG. 9B are diagrams of one burst transmission according to an embodiment of this application;
FIG. 10 is a transmission diagram of two burst transmissions according to an embodiment of this application;
FIG. 11 is a signal interaction flowchart of a data transmission method for an interface according to an embodiment of this application;
FIG. 12 is a transmission diagram of one burst transmission according to an embodiment of this application;
FIG. 13 is a diagram of a structure of an interface apparatus according to an embodiment of this application; and
FIG. 14 is a diagram of a structure of an interface apparatus according to an embodiment of this application.

**DESCRIPTION OF EMBODIMENTS**

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more than two.

Embodiments of this application may be applied to a scenario of a signal transmission between devices. Devices may be directly connected to each other, or a plurality of devices may be connected through a routing device. Signals may be transmitted (sent and received) between devices in a wired manner, or the signals may be transmitted (sent and received) in a wireless manner. The signal may be directly transmitted between the devices, or the signal may be transmitted between the devices through an interface apparatus, and the signal is transmitted to a processing unit in the device through a bus in the device.

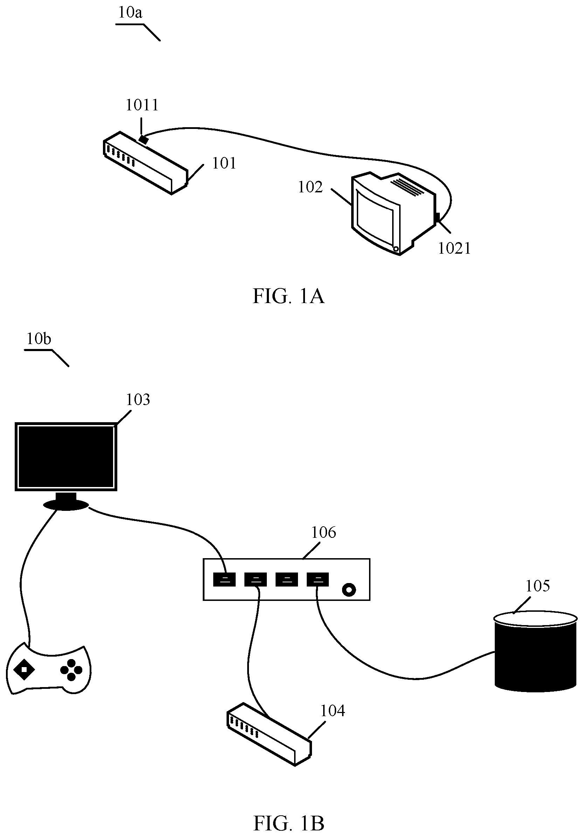

For example, FIG. 1A is a diagram of an architecture of a communication system 10a in which devices are directly connected to each other. For a device 101 and a device 102, an interface 1011 in the device 101 is connected to an interface 1021 in the device 102 through a cable, to implement a signal transmission between the device 101 and the device 102, for example, short-range transmissions such as an audio and video data transmission and a charging signal transmission. For example, as shown in FIG. 1A, the device 101 is a set-top box, the device 102 is a television, and audio and video data is transmitted between an interface of the set-top box and an interface of the television through a cable; or the device 101 is a display, the device 102 is a game handle, and control information is transmitted between an interface of the display and an interface of the game handle through a cable.

FIG. 1B is a diagram of an architecture of a communication system 10b in which devices are connected to each other through a routing device. A device 103 to a device 105 are all connected to a routing device 106 through a cable, and a signal transmission may be performed between interfaces of the devices through the routing device, for example, short-range transmissions such as an audio and video data transmission and a charging signal transmission. In this scenario, an interface of each device is connected to an interface of the routing device, and a signal transmitted between the interfaces of the devices needs to be transmitted through the interface of the routing device. For example, the device 103 is a display, the device 104 is a set-top box, and the device 105 is an audio player. An interface of the set-top box 104 transmits audio and video data to the interface of the routing device 106, and the interface of the routing device 106 transmits the audio and video data to an interface of the display 103. Alternatively, the interface of the display 103 transmits audio data to an interface of the audio player 105 through the interface of the routing device 106.

In the foregoing two communication systems, devices interconnected through interfaces may be various electronic devices, such as a personal computer, a notebook computer, a mobile phone, a digital camera, a digital television, an audio device, a DVD player, a set-top box, a game console, a printer, a mouse, a keyboard, and a home appliance. The transmitted signal may be an audio signal, a video signal, internet data, internet of things data, a charging signal, or the like.

To meet various signal transmission requirements, the industry defines various types of interface specifications for signal transmissions between devices, such as the universal serial bus (universal serial bus, USB) interface specification, the high definition multimedia interface (high definition multimedia interface, HDMI) interface specification, the DisplayPort (DP) interface specification, the unified multimedia interconnection (unified multimedia interconnection, UMMI) interface specification, and the high-speed serial computer extended bus (peripheral component interconnect express, PCI-Express) interface specification. Correspondingly, an interface may be an HDMI, a mini HDMI, a micro HDMI, Type-A, Type-B, Micro-B, Type-C, or the like.

For example, in the foregoing short-range transmission scenarios of cable interconnection, a connection between interfaces of the set top box/a speaker and the television, or a connection between interfaces of the game console and the television is through a USB cable, and a followed interface standard is the USB interface specification; or the connection is through an HDMI cable, and a followed interface standard is the HDMI interface specification; or the connection is through a DP cable, and a followed interface standard is the DisplayPort interface specification.

Embodiments of this application further provide another interface standard that can replace the foregoing interface standards (for example, a USB interface or an HDMI interface): a unified media interconnection (unified media interconnection, UMI) interface. The UMI interface can be used to perform adaptive data transmissions and implement a charging function. Certainly, the UMI interface may alternatively have another interface name. When the UMI interface is replaced with the another interface name, the another interface can be used to implement a function of the UMI interface in this application.

In this application, the UMI interface also supports a direct connection between devices, or a multi-device networking connection (for example, devices are connected through a routing device, or devices are connected through a docking station). The device may be any electronic device or component. When the device is an electronic device, the electronic device is, for example, a personal computer, a display, an audio and video device, a digital device, a printer, a router, a game console, or a vehicle-mounted device, and the electronic device includes a UMI interface. When the device is a component, the component may be understood as any interface device (interface apparatus/interface component), and the interface device is a UMI interface.

In this application, signals may be transmitted (sent and received) between devices in a wired manner, or the signals may be transmitted (sent and received) in a wireless manner. The signal may be directly transmitted between the devices, or the signal may be transmitted between the devices through an interface device (for example, an interface device of a routing device), and then transmitted to a processing unit in each device through a bus.

When the device is an electronic device, the devices may be interconnected through UMI interfaces of the devices. This is similar to the scenario shown in FIG. 1A. For example, UMI interfaces of the set-top box and the television are interconnected through a cable for signal transmissions.

When the device is an interface device, the device may be a chip. In other words, chips are interconnected to each other. The chip may be an interface chip on an electronic device/a cable/a docking station/a conversion adapter/a router. The docking station may be inserted with a gigabit network port, a video graphics array (video graphics array, VGA) interface, an HDMI, a TF card (trans-flash card), an SD card (secure digital memory card), a charging interface, and a USB interface.

In this application, when the device is a chip, the chip may include an interface module. In other words, this application may be applied to interface modules through which chips are interconnected. The interface module may be understood as an IP integrated in the chip. Alternatively, the interface module may be sold as an independent IP.

For example, when the chip is a system on chip (system on chip, SoC), a central processing unit (central processing unit, CPU), a graphics processing unit (graphics processing unit, GPU), or the like, this application may be applied to an interface module of the chip like the SoC, the CPU, or the GPU. When the chip is a small chip like a die (die), the interface module may be understood as a sending circuit and/or a receiving circuit in the die. Alternatively, the chip may be an input/output (input/output, I/O) die that includes only an interface function.

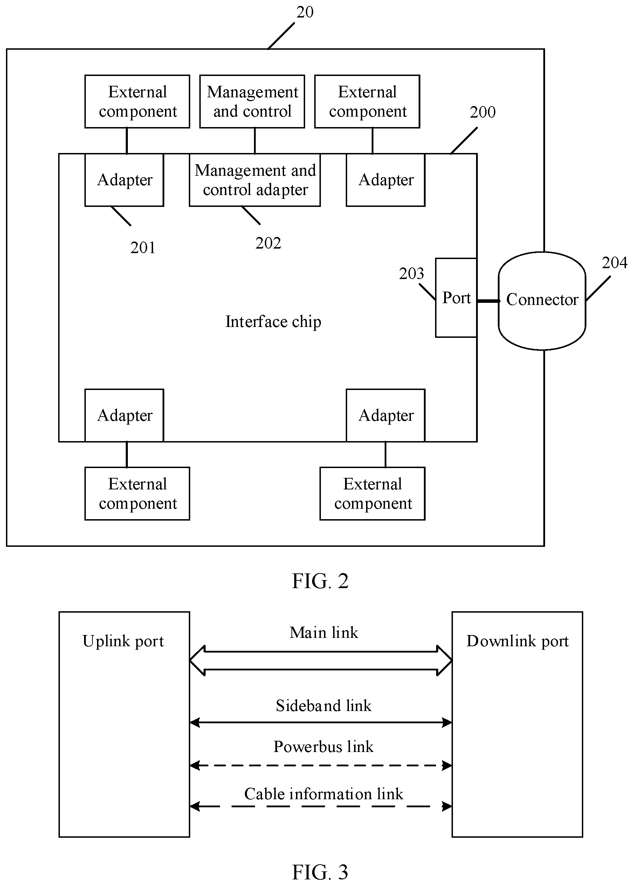

In this application, when the device is an electronic device, FIG. 2 is a diagram of basic components of an electronic device 20. The electronic device 20 includes an interface chip 200 (UMI interface). The interface chip 200 includes one or more adapters 201, one or more management and control adapters 202, and one or more ports 203. Alternatively, when the electronic device 20 is a routing device, the interface chip 200 includes only one or more ports 203. Each adapter 201 in the one or more adapters 201 may be coupled to an external component of the interface chip 200. The one or more management and control adapters 202 may be coupled to a component that is used for management and control and that is outside the interface chip 200. The port 203 may be coupled to a connector 204 of the electronic device 20, and the connector 204 is configured to be coupled to an external device of the electronic device 20. The one or more adapters 201 may be sending/receiving adapters. For example, when the adapter 201 is configured to adapt an audio/video format, the adapter 201 may be an audio/-video sending/receiving adapter. When the adapter 201 is configured to perform third-party protocol adaptation, the adapter 201 may be a third-party protocol adapter.

For example, when the port 203 is a downlink port, the sending adapter may be configured to adapt to-be-sent service information for service information that can be transmitted on the port 203 of the interface chip, and send the service information to the outside through the port 203. When the port 203 is an uplink port, the receiving adapter 201 may be configured to adapt service information received from the port 203 for service information internally processed by the electronic device 20 for internal processing. The management and control adapter 202 may be configured to adapt control information.

Basic components of different electronic devices 20 may be combined to form a plurality of different device types. For example, the electronic device 20 is a source device that includes at least one downlink port and at least one audio/video sending adapter, or a source device that includes at least one uplink port and one audio/video receiving adapter, or a docking station device that includes at least one uplink port, at least one audio/video receiving adapter, and at least one conventional audio/video interface, or a routing device that includes at least one downlink port and at least one uplink port but has no audio/video sending adapter and no audio/video receiving adapter, or a composite device that has both an uplink port and a downlink port.

FIG. 3 is a diagram of an inter-interface transmission according to an embodiment of this application. In a UMI system, a main link (main link, ML) and a sideband link (sideband link, SL) are included between an uplink port and a downlink port between devices, and a powerbus link (powerbus link, PL) and a cable information link (cableinfo link, CL) may be further included. The cable information link may be used to transmit cable information such as a cable model and cable capability information.

The main link is used for a high-speed data transmission, for example, an audio and video signal transmission. The sideband link is mainly used for device management and control, such as device discovery, capability query, device configuration, and device control, and may also be used for a low-speed data transmission and a control packet transmission.

In some scenarios, the main link includes one or more lanes (lanes), each lane supports only a unidirectional transmission, and the sideband link includes two single-end lanes in different directions. Alternatively, some lanes of the main link are unidirectional lanes, the other lanes are bidirectional lanes, and the sideband link includes bidirectional lanes. One main link may include a plurality of lanes, for example, 2/5/9 lanes. A larger quantity of lanes indicates a higher data transmission speed.

In addition, either the uplink port or the downlink port may include a plurality of pins, for example, a pin connected to a ground cable, a pin connected to a power cable, a pin connected to a lane of the main link, and a pin connected to a lane of the sideband link.

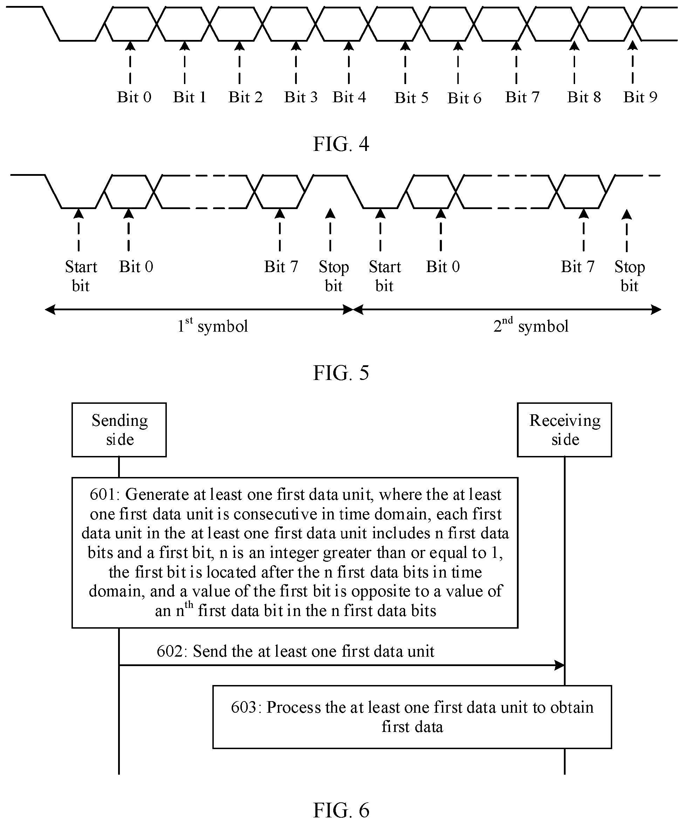

Generally, when data is transmitted, if there is no associated clock accompanying, a deviation between a sending side and a receiving side of the data may easily accumulate and increase in a data receiving and sampling process due to reasons such as a clock frequency deviation or jitter. FIG. 4 is a diagram of transmitting a plurality of data bits. Each bit includes one clock cycle. During sampling, the receiving end may obtain, based on level information sampled in each clock cycle, bit data corresponding to each clock cycle. In a process of transmitting a bit 0 to a bit 7, corresponding bit data may also be sampled in clock cycles. Due to reasons such as a clock deviation, a delay occurs from a bit 8, and bit data starting from bit data of the bit 8 cannot be correctly sampled.

To correct a sampling error, during the data transmission, a lane needs to have sufficient flip signals to correct the sampling error. Therefore, one symbol includes three parts: 1-bit start bit data, multiple-bit data, and 1-bit stop bit data. A start bit and a stop bit have different levels to implement signal flipping, and may be referred to as flip bits. To reduce power consumption, when no data is transmitted, the lane of the link may be always at a high level, and no signal is flipped, to maintain low power consumption. When data needs to be transmitted, a start bit at a low level is used to identify a start of the data transmission, and after data bits are transmitted, a stop bit at a high level is used to identify an end of the transmission. Alternatively, when no data is transmitted, the lane of the sideband link may be always at a low level, and no signal is flipped. When data needs to be transmitted, a start bit at a high level is used to identify a start of the data transmission, and after data bits are transmitted, a stop bit at a low level is used to identify an end of the transmission. In this way, signal flipping between two symbols is implemented by using start bits and stop bits of different levels

FIG. 5 is a diagram of a symbol transmission in which the sideband link corrects a sampling error through signal flipping. When N symbols are transmitted, and N is an integer greater than or equal to 2, for example, each of a plurality of symbols (for example, a 1st symbol and a 2nd symbol) includes 10 bits, including 1 start bit, 8 data bits (a bit 0 to a bit 7), and 1 stop bit. It is assumed that when a sending side is in an idle state, the lane of the sideband link is always at the high level. When the 1st symbol needs to be transmitted, 1 low-level start bit is first transmitted, then the data bits 0 to 7 are transmitted, and then 1 high-level stop bit is transmitted. Next, when the 2nd symbol is transmitted, 1 low-level start bit is first transmitted, then the data bits 0 to 7 are transmitted, and then 1 high-level stop bit is transmitted. By analogy, the N symbols of one data packet may be transmitted completely. Each symbol has a flip bit. Therefore, for the receiving side, even if a clock deviation exists in a receiving and sampling process, due to existence of signal flipping on the lane, the receiving end may correct the sampling error through signal flipping.

However, the foregoing symbol transmission manner is equivalent to that when each symbol is transmitted, time for transmitting the start bit and the stop bit is required for the multiple-bit data. Consequently, bandwidth utilization is low. For example, in the example in FIG. 5, for each symbol, time for transmitting 10 bits is required for transmitting 8-bit data, and bandwidth utilization is 80%.

Therefore, this application provides a data transmission method for an interface. In the method, when each symbol is transmitted, each symbol includes (n+1) bits, n is an integer greater than or equal to 1, and 1 flip bit is introduced into every n data bits to implement sampling error correction. In this way, bandwidth utilization of the sideband link may be improved to $n/(n+1)$. For example, each symbol includes 9 bits, the first 8 bits are data bits, the last bit is a flip bit, and bandwidth utilization is 88.9%. Compared with that in the conventional technology in which time for transmitting 10 bits is required for transmitting 8-bit data, bandwidth utilization of the sideband link in this application is improved.

The following describes embodiments of this application.

It should be noted that, in the method of the present invention, data transmitted between interfaces may be transmitted on a sideband link or on a main link. This is not limited in the present invention.

FIG. 6 is a signal interaction diagram of a data transmission method for an interface. The method includes the following procedure.

601: A sending side generates at least one first data unit, where the at least one first data unit is consecutive in time domain, each first data unit in the at least one first data unit includes n first data bits and a first bit, n is an integer greater than or equal to 1, the first bit is located after the n first data bits in time domain, and a value of the first bit is opposite to a value of an $n^{th}$ first data bit in the n first data bits.

In some embodiments, the sending side is an electronic device, an interface device, a port device, or an interface chip. When the sending side is an electronic device, the electronic device may be, for example, one of a source device, a sink device, a routing device, a docking station, or a composite device. When the sending side is an interface device, the interface device is, for example, an interface chip. The interface chip is, for example, an interface chip of one of a source device, a sink device, a routing device, a docking station, or a composite device.

The source device, the sink device, and the composite device are, for example, electronic devices such as a personal computer, a display, an audio and video device, a digital device, a printer, a router, a game console, and a vehicle-mounted device.

In some embodiments, the at least one first data unit is a plurality of symbols, that is, each first data unit is one symbol, and the plurality of symbols are consecutive in time domain. Each of the plurality of symbols includes (n+1) bits, including n first data bits and a first bit. The first bit is located after the n first data bits in time domain, that is, the first bit is a last bit of each symbol. When a value of the first bit is opposite to a value of an $n^{th}$ first data bit in the n first data bits, the first bit is used to implement signal flipping in a symbol transmission process.

In some embodiments, the at least one first data unit is obtained by performing lane encoding on to-be-sent data. For example, the at least one first data unit obtained through encoding is a plurality of symbols, and each symbol includes (n+1) bits. In some embodiments, when time for transmitting 1 bit is one clock cycle, transmission duration of each symbol is (n+1) clock cycles.

602: The sending side sends the at least one first data unit.

Correspondingly, a receiving side receives the at least one first data unit sent by the sending side.

In some embodiments, the sending side sends the at least one first data unit to an interface of the receiving side through an interface of the sending side. The at least one first data unit is transmitted on a link between the interface of the sending side and the interface of the receiving side.

For example, when this application may be applied to a scenario of communication between a plurality of devices in the foregoing UMI system, the sending side is a source device, the receiving side is a sink device, and the source device is directly connected to the sink device, or an interface of the source device is directly connected to an interface of the sink device. Alternatively, the sending side is a source device or a composite device, the receiving side is a routing device, and an interface of the source device or the composite device is connected to an interface of the routing device. Alternatively, the sending side is a routing device, and the receiving side is a sink device or a composite device. Alternatively, the sending side is a source device, and the receiving side is a composite device. Alternatively, the sending side is a composite device, and the receiving side is a sink device. Alternatively, the sending side is a docking station, and the receiving side is one of a sink device, a routing device, or a composite device. Alternatively, the sending side is one of a source device, a routing device, or a composite device, and the receiving side is a docking station.

In some embodiments, when the sending side and the receiving side are electronic devices, the interface is, for example, an interface device, and the interface device is an interface chip. Alternatively, the interface is an interface module in a chip. For example, when the interface is used in the foregoing UMI system, the interface is the foregoing UMI interface.

In some embodiments, that the sending side sends the at least one first data unit to the receiving side includes: A downlink port on an interface chip of the sending side sends the at least one first data unit to an uplink port on an interface chip of the receiving side. Specifically, the at least one first data unit may be sent to a pin/lane of a link lane of the uplink port through a pin/lane of a link lane of the downlink port.

For example, when the sending side is a source device and the receiving side is a sink device, it is equivalent to that a downlink port on an interface chip of the source device sends the at least one first data unit to an uplink port on an interface chip of the sink device. When the sending side is a source device and the receiving side is a routing device, it is equivalent to that a downlink port on an interface chip of the source device sends the at least one first data unit to an uplink port on an interface chip of the sink device.

603: The receiving side processes the at least one first data unit to obtain first data.

The first data is a sampling result of the at least one first data unit. When each first data unit includes (n+1) bits, data bits included in each first data unit are n bits, and only 1 bit is a flip bit. A value of the flip bit is opposite to a value of an $n^{th}$ bit transmitted in time domain, and bandwidth utilization of the link between the interface of the sending side and the interface of the receiving side is n/(n+1). In comparison with the conventional technology in which bandwidth utilization is (n-1)/(n+1) if each data unit includes (n+1) bits, in this design of the first data unit in this application, signal flipping when the transmission is performed on the lane can be implemented, thereby correcting a data sampling error, and the bandwidth utilization of the link between the interfaces is also improved.

For example, the at least one first data unit in step 601, step 602, and step 603 is a plurality of symbols, 1 first bit is inserted at an interval of n bits, and the first bit is used as a flip bit of the symbol. For each symbol, a signal of the first bit is obtained by flipping a signal of an $n^{th}$ bit. For example, for binary data, 0 is flipped to 1, and 1 is flipped to 0. It is assumed that a low level indicates 0, and a high level indicates 1. In this application, the first bit is a flip bit, which means that, if a level of the $n^{th}$ bit in time domain is the low level, a level of the first bit is the high level; or if a level of the $n^{th}$ bit is the high level, a level of the first bit is the low level. It is assumed that a low level indicates 1, and a high level indicates 0. In this application, the first bit is a flip bit, which means that, if a level of the $n^{th}$ bit of each symbol in time domain is the low level, a level of the first bit is the high level; or if a level of the $n^{th}$ bit of each symbol in time domain is the high level, a level of the first bit is the low level.

In other words, if duration of transmitting each bit is one clock cycle, (n+1) clock cycles are one symbol cycle. In the (n+1) clock cycles of the symbol cycle, a signal in an $(n+1)^{th}$ clock cycle is obtained by flipping a signal in an $n^{th}$ clock cycle. First n clock cycles are used to transmit data of the n first data bits, and the $(n+1)^{th}$ clock cycle is used to transmit a flip bit of the $n^{th}$ bit.

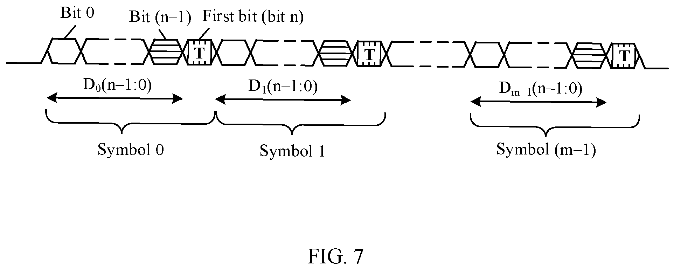

For example, FIG. 7 is a diagram of transmitting a plurality of symbols. When a quantity of the plurality of symbols is m, the m symbols are denoted as a symbol 0 to a symbol (m-1). Each of the m symbols includes (n+1) bits, and the (n+1) bits are denoted as a bit 0 to a bit n, where the bit 0 to a bit (n-1) are first data bits, and the bit n is a first bit, namely, a flip bit T. $D_i(n-1:0)$ indicates a bit 0 to a bit (n-1) of an $i^{th}$ symbol, where a value range of i is 0 to (m-1). A value of the bit n of each symbol is opposite to a value of the bit (n-1). For example, when the value of the bit (n-1) is 1, the value of the bit n is 0, or when the value of the bit (n-1) is 0, the value of the bit n is 1. The receiving side may sample the m symbols, to obtain data transmitted by using the first n data bits of each of the m symbols, namely, the first data.

In this case, if a value of n is 8, bandwidth utilization of the link between the interfaces is approximately 88.9%. In the conventional technology, bandwidth utilization of the link is approximately 80% when the value of n is 8, and bandwidth utilization in this application is improved by 8.9% compared with that in the conventional technology. In addition, the last bit of each of the plurality of symbols is a flip bit of a previous bit of the symbol in time domain. This can ensure that signal flipping exists on each symbol or every (n+1) clock cycles, and help the receiving side correct the sampling error during data sampling.

To distinguish between different burst transmission data packets, in this application, an end symbol may be introduced to indicate an end of one burst transmission.

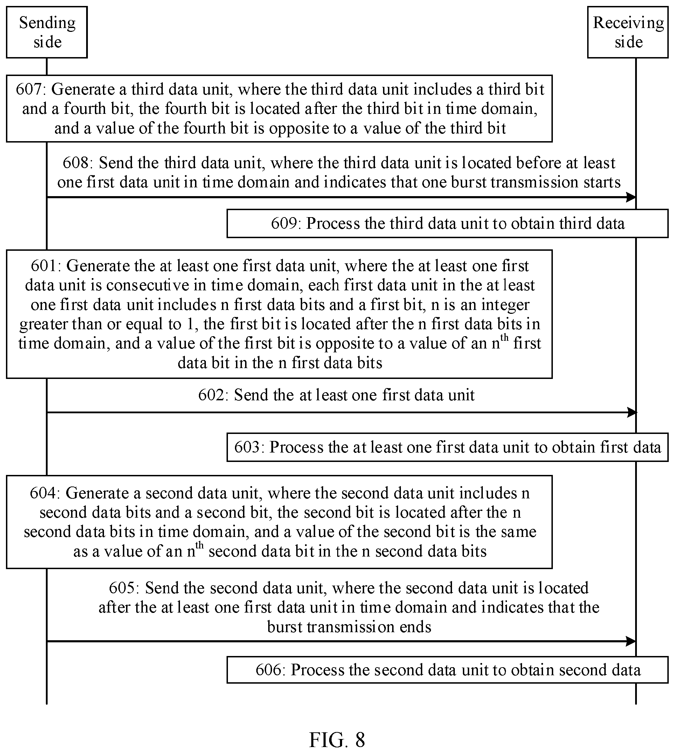

Therefore, in some embodiments, FIG. 8 is a signal interaction diagram of the data transmission method for an interface. The method further includes the following procedure.

604: The sending side generates a second data unit, where the second data unit includes n second data bits and a second bit, the second bit is located after the n second data bits in time domain, and a value of the second bit is the same as a value of an $n^{th}$ second data bit in the n second data bits.

In some embodiments, both the at least one first data unit and the second data unit are data units belonging to the burst transmission.

For example, based on the foregoing example, when the second data unit is one symbol, and is denoted as a symbol m, a data packet in one burst transmission includes a symbol 0 to a symbol (m-1) and the symbol m, and there are a total of (m+1) symbols. In other words, (m+1) consecutive symbols form one burst transmission. The symbol m is an $(m+1)^{th}$ symbol in the data packet in the burst transmission, and the symbol m includes the n second data bits and the second bit. The second bit is an $(n+1)^{th}$ bit of the symbol m in time domain, and the second bit is located after the n second data bits in time domain. The value of the second bit is the same as the value of the $n^{th}$ second data bit in the n second data bits.

605: The sending side sends the second data unit, where the second data unit is located after the at least one first data unit in time domain and indicates that the burst transmission ends.

Correspondingly, the receiving side receives the second data unit. The second data unit may also be referred to as an end of burst (end of burst, EOB).

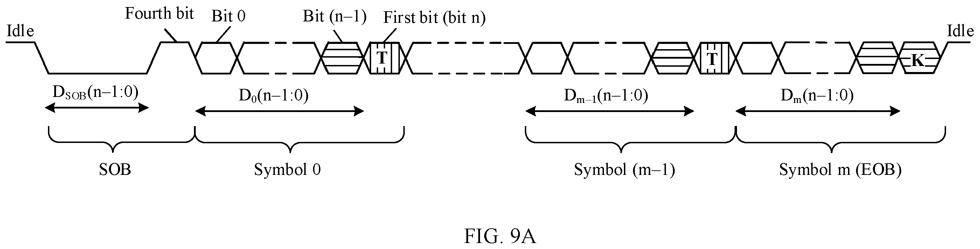

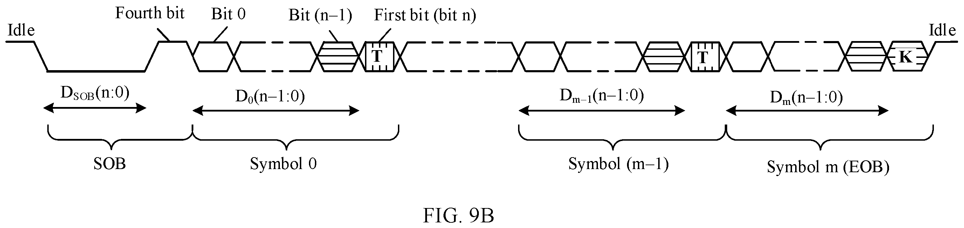

For example, FIG. 9A and FIG. 9B are diagrams of one burst transmission. Based on first m symbols shown in FIG. 7, the sending side continues to send the $(m+1)^{th}$ symbol, namely, the symbol m. In time domain, the symbol m is after the m symbols and is consecutive to an $m^{th}$ symbol, and the symbol m may be referred to as an EOB symbol. First n bits of the symbol m, namely, the bit 0 to the bit (n-1), are data bits ($D_m(n-1:0)$), and the symbol m is located on the last bit in time domain, that is, the $(n+1)^{th}$ bit (the bit n) is denoted as a bit K. A value of the bit K is the same as the value of the $n^{th}$ bit of the symbol m. For example, when the value of the $n^{th}$ bit (the bit (n-1)) is 0, the value of the bit K is also 0, or when the value of the $n^{th}$ bit is 1, the value of the bit K is also 1.

In other words, if duration of transmitting each bit is one clock cycle, (n+1) clock cycles are one symbol cycle. In the burst transmission, in (n+1) clock cycles of the transmitted $(m+1)^{th}$ symbol, a signal in an $(n+1)^{th}$ clock cycle is the same as a signal in an $n^{th}$ clock cycle, or a level in the $(n+1)^{th}$ clock cycle is the same as a level in the $n^{th}$ clock cycle. The first n clock cycles are used to transmit data of the n second data bits, the $(n+1)^{th}$ clock cycle is used to transmit data of the $(n+1)^{th}$ bit/second bit, and the value of the second bit is the same as the value of the $n^{th}$ second data bit in the n second data bits.

In some embodiments, after this burst transmission is completed, the lane returns to an idle state. For example, the idle state is at the high level. The sending side transmits the bit K, indicating that this burst transmission ends, and the lane recovers to the idle state, that is, the lane returns to a high-level state (as shown in FIG. 9A and FIG. 9B). Certainly, in the idle state, the lane may alternatively be at the low level (not shown in FIG. 9A and FIG. 9B). In this case, after the sending side transmits the bit K, the lane returns to a low-level state.

606: The receiving side processes the second data unit to obtain second data.

The second data is a sampling result of the second data unit. The first data and the second data are data belonging to the burst transmission.

For example, as shown in the examples in FIG. 9A and FIG. 9B, the receiving side may identify, based on the bit K, that the burst transmission ends. To be specific, if a value of an $(n+1)^{th}$ bit of a symbol is the same as a value of an $n^{th}$ bit, it means that a bit K is received, and further means that one burst ends.

In some embodiments, after receiving of the burst transmission ends, the lane may recover to the idle state. For example, the idle state is at the high level. The receiving side receives the bit K, indicating that this burst transmission ends, and the lane recovers to the idle state, that is, the lane returns to the high-level state. Certainly, in the idle state, the lane may alternatively be at the low level. In this case, after the receiving side receives the bit K, the lane returns to the low-level state.

It should be noted that, when the sending side performs lane encoding, the second data unit may be generated before the first data unit, or may be generated after the second data unit. However, when the sending side sends data, the second data unit is sent after the first data unit in time domain.

To further improve data transmission reliability and avoid incorrect determining of the start of the burst transmission on the receiving side due to reasons such as disturbance, in this application, a third data unit may be introduced as a data unit indicating the start of the burst transmission or as a $1^{st}$ data unit transmitted in time domain in the burst transmission, that is, may be sent before the at least one first data unit. The third data unit also includes (n+1) bits. A difference is that the (n+1) bits herein are not data bits, but are bits indicating the start of the burst transmission. This can prevent an error of a failure to correctly identify the start of the burst transmission due to a bit-K detection error. In this application, transmission bits of the third data unit are designed, to avoid the foregoing problem of incorrect determining.

Therefore, as shown in FIG. 8, the method may further include the following procedure.

607: The sending side generates the third data unit, where the third data unit includes a third bit and a fourth bit, the fourth bit is located after the third bit in time domain, and a value of the fourth bit is opposite to a value of the third bit.

In some embodiments, the value of the third bit is opposite to a value of a bit indicating the idle state, and the value of the fourth bit is the same as the value of the bit indicating the idle state.

In some embodiments, both the at least one first data unit and the third data unit are data units belonging to the burst transmission. In this application, the third data unit is denoted as a start of burst (start of burst, SOB).

In some embodiments, before sending the at least one first data unit, the sending side first generates the third data unit, to indicate that the burst transmission starts.

For example, according to the foregoing example, when the third data unit is one symbol, is (n+1) bits, and is denoted as an SOB, the SOB includes n third bits and the fourth bit. The n third bits are first n bits included in the SOB, the fourth bit is an (n+1)$^{th}$ bit included in the SOB, and the fourth bit is located after the n third bits in time domain. The value of the fourth bit is opposite to the value of the third bit. Optionally, values of the n third bits are opposite to the value indicating the idle state, and the value of the fourth bit is the same as the value indicating the idle state. If the value of the bit of the idle state is 1, the values of the n third bits are 0, and the value of the fourth bit is 1. If the value of the bit of the idle state is 0, the values of the n third bits are 1, and the value of the fourth bit is 0.

From a perspective of signals, if a signal level in the idle state is the high level, a signal level in clock cycles of the n third bits is the low level, and a signal level in a clock cycle of the fourth bit is the high level. If a signal level in the idle state is the low level, a signal level in clock cycles of the n third bits is the high level, and a signal level in a clock cycle of the fourth bit is the low level.

In another embodiment, when the third data unit is (n+2) bits and is denoted as an SOB, the SOB includes (n+1) third bits and the fourth bit. The (n+1) third bits are first (n+1) bits included in the SOB, the fourth bit is an (n+2)$^{th}$ bit included in the SOB, and the fourth bit is located after the (n+1) third bits in time domain. The value of the fourth bit is opposite to the value of the third bit. When the third data unit is (n+2) bits, more time may be used for error recovery and low power consumption wake-up. Optionally, values of the (n+1) third bits are opposite to the value indicating the idle state, and the value of the fourth bit is the same as the value indicating the idle state. If the value of the bit of the idle state is 1, the values of the (n+1) third bits are 0, and the value of the fourth bit is 1. If the value of the bit of the idle state is 0, the values of the (n+1) third bits are 1, and the value of the fourth bit is 0. From a perspective of signals, if a signal level in the idle state is the high level, a signal level in clock cycles of the (n+1) third bits is the low level, and a signal level in a clock cycle of the fourth bit is the high level. If a signal level in the idle state is the low level, a signal level in clock cycles of the (n+1) third bits is the high level, and a signal level in a clock cycle of the fourth bit is the low level.

608: The sending side sends the third data unit, where the third data unit is located before the at least one first data unit in time domain and indicates that the burst transmission starts.

Correspondingly, the receiving side receives the third data unit.

In some embodiments, the burst transmission includes the third data unit indicating the start of the burst transmission, the at least one first data unit, and the second data unit indicating the end of the burst transmission.

For example, FIG. 9A and FIG. 9B are diagrams of the burst transmission. When the sending side transmits the burst transmission, the data packet in the burst transmission includes the SOB and the symbol 0 to the symbol m, and there are a total of (m+2) symbols. In other words, (m+2) consecutive symbols are transmission time of the burst transmission. The SOB is a $1^{st}$ symbol in the data packet in the burst transmission, the symbol 0 to the symbol m are data symbols used to transmit bits in the burst data packet, and the symbol m is the (m+2)$^{th}$ symbol transmitted in time domain. When the symbol m is the foregoing EOB, it indicates the end of the burst transmission.

When the third data unit is (n+1) bits, as shown in FIG. 9A, when the idle state exists before the burst transmission starts, and the level in the idle state is the high level, the level of the first n third bits of the SOB is the low level, and the level of the fourth bit is the high level. For example, as shown in FIG. 9A, the first n third bits are bits $D_{SOB}(n-1:0)$. Similarly, as not shown in FIG. 9A, when the idle state exists before the burst transmission starts, and the level in the idle state is the low level, the level of the first n third bits of the SOB is the high level, and the level of the fourth bit is the low level.

In other words, if duration of transmitting each bit is one clock cycle, (n+1) clock cycles are a symbol cycle of one SOB. In the burst transmission, in the (n+1) clock cycles of the transmitted SOB, first n clock cycles are used to transmit the n third bits, and an $(n+1)^{th}$ clock cycle is used to transmit the fourth bit, where the value of the third bit is opposite to the value indicating the idle state, and the value of the fourth bit is the same as the value indicating the idle state. Signals in the first n clock cycles are different from a signal in the clock cycle in the idle state. In other words, a level in the first n clock cycles is opposite to a level of the signal in the clock cycle in the idle state. A signal in the $(n+1)^{th}$ clock cycle is the same as the signal in the clock cycle in the idle state. In other words, a level in the $(n+1)^{th}$ clock cycle is the same as the level in the clock cycle in the idle state.

When the third data unit is (n+2) bits, as shown in FIG. 9B, when the idle state exists before the burst transmission starts, and the level in the idle state is the high level, the level of the first (n+1) third bits of the SOB is the low level, and the level of the fourth bit is the high level. For example, as shown in FIG. 9B, the first (n+1) third bits are bits $D_{SOB}(n:0)$. Similarly, as not shown in FIG. 9B, when the idle state exists before the burst transmission starts, and the level in the idle state is the low level, the level of the first (n+1) third bits of the SOB is the high level, and the level of the fourth bit is the low level.

In other words, if duration of transmitting each bit is one clock cycle, (n+2) clock cycles are a symbol cycle of one SOB. In the burst transmission, in the (n+2) clock cycles of the transmitted SOB, first (n+1) clock cycles are used to transmit the (n+1) third bits, and an $(n+2)^{th}$ clock cycle is used to transmit the fourth bit, where the value of the third bit is opposite to the value indicating the idle state, and the value of the fourth bit is the same as the value indicating the idle state. Signals in the first (n+1) clock cycles are different from a signal in the clock cycle in the idle state. In other words, a level in the first (n+1) clock cycles is opposite to a level of the signal in the clock cycle in the idle state. A signal in the $(n+2)^{th}$ clock cycle is the same as the signal in the clock cycle in the idle state. In other words, a level in the $(n+2)^{th}$ clock cycle is the same as the level in the clock cycle in the idle state.

609: The receiving side processes the third data unit to obtain third data.

The first data and the third data are data belonging to the burst transmission.

As shown in the examples in FIG. 9A and FIG. 9B, the receiving side receives this burst transmission. The burst transmission includes an SOB symbol and the symbol 0 to the symbol m, where the symbol 0 to the symbol (m-1) are data symbols, and the symbol m is an EOB symbol. Because the SOB is not a data symbol, a receiving result of this burst transmission includes the first data, the second data, and the third data. The first data is data of the n first data bits in each of the symbol 0 to the symbol (m-1), the second data is data of the n second data bits of the symbol m, and the third data is ignored.

In some embodiments, time of the third data unit may be used as low power consumption wake-up time, and is used to wake up another circuit used for data receiving and data processing on the link, for example, a management adapter.

In some embodiments, after one burst transmission ends, a next burst transmission may be transmitted, and there is no idle state between two burst transmissions. In other words, an EOB of a previous burst transmission and an SOB of a next burst transmission are consecutive. In some implementation methods of the present invention, values of first n bits of the SOB in the next burst transmission are the same as the value of the bit of the idle state, and actual effect is also equivalent to that after the previous burst transmission ends, the lane of the link between the interfaces returns to the idle state.

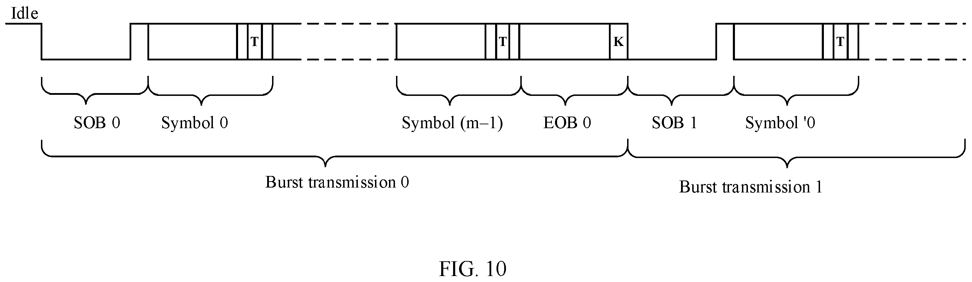

For example, FIG. 10 is a transmission diagram of two burst transmissions. Two consecutive burst transmissions sent by the sending side are denoted as a burst 0 (burst transmission 0) and a burst 1 (burst transmission 1). Symbols transmitted in the burst 0 include an SOB 0, a symbol 0 to a symbol m, and an EOB 0. Symbols transmitted in the burst 1 include an SOB 1, a symbol '0 to a symbol 'm, and an EOB 1. A quantity of symbols in the symbol 0 to the symbol m may be the same as or different from a quantity of symbols in the symbol '0 to the symbol 'm. As shown in FIG. 10, the SOB 1 and the EOB 0 are consecutive. Alternatively, if each symbol in the two burst transmissions includes (n+1) bits, it may mean that a $1^{st}$ bit of the SOB 1 is located after an $(n+1)^{th}$ bit of the EOB 0, and the $1^{st}$ bit of the SOB 1 is consecutive to the $(n+1)^{th}$ bit of the EOB 0.

In this case, if an error occurs on the second bit of the EOB 0 transmitted in the burst 0 due to a clock frequency deviation, jitter, or the like, for example, signal flipping is not performed on the second bit, a level of the second bit is different from a level of the $n^{th}$ bit of the EOB 0, and the receiving side does not know the end of the transmission of the burst 0 during sampling. If the SOB 1 is not transmitted in the burst 1, the receiving side cannot accurately identify time at which a data symbol starts to be transmitted in the burst 1, and a timing error of the receiving side on the burst 1 is caused. However, if the SOB 1 is first transmitted when the burst 1 starts to be transmitted, the receiving side may accurately identify, based on bit data transmitted in the SOB 1, the time at which the data symbol starts to be transmitted in the burst 1, to avoid the timing error of the receiving side on the burst 1, and improve transmission reliability of the link between the interfaces.

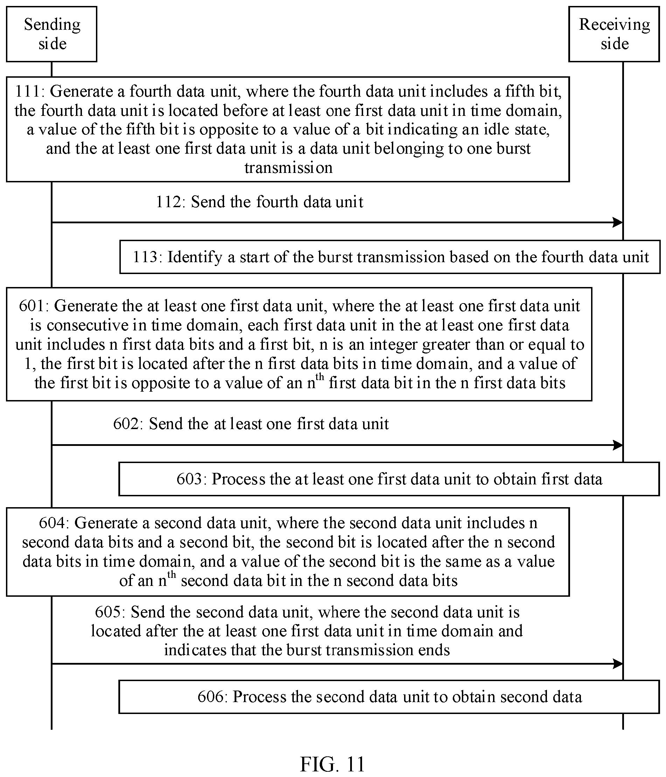

The foregoing describes a case in which the third data unit of the burst transmission may indicate the start of the burst transmission, and the burst transmission includes the third data unit. In some embodiments, in this application, a fourth data unit may alternatively be used, and the fourth data unit includes 1 bit to indicate the start of the burst transmission. The bit may be understood as a start bit. Therefore, FIG. 11 is a diagram of signal interaction in the data transmission method for an interface. The following procedure is included.

111: The sending side generates the fourth data unit, where the fourth data unit includes a fifth bit, the fourth data unit is located before the at least one first data unit in time domain, a value of the fifth bit is opposite to the value of the bit indicating the idle state, and the at least one first data unit is a data unit belonging to the burst transmission.

In some embodiments, both the at least one first data unit and the second data unit are data unit belonging to the burst transmission, and the fourth data unit is located before the at least one first data unit in time domain and indicates that the burst transmission starts.

For example, according to the foregoing example, the fourth data unit includes 1 fifth bit. If the value of the bit of the idle state is 1, the value of the fifth bit is 0. If the value of the bit of the idle state is 0, the value of the fifth bit is 1.

In other words, in this implementation, when the fifth bit is used as the start bit, the start of the burst transmission is identified by flipping the idle state. The fifth bit is obtained by flipping the level of the lane in the idle state. If the lane of the link in the idle state is at the low level, a high level in one clock cycle may indicate the start of the burst transmission. If the lane of the link in the idle state is at the high level, a high level in one clock cycle may indicate the start of the burst transmission. In other words, a bit in one clock cycle before the burst transmission is obtained by flipping the level of the lane of the link in the idle state.

112: The sending side sends the fourth data unit.

Correspondingly, the receiving side receives the fourth data unit.

113: The receiving side identifies the start of the burst transmission based on the fourth data unit.

In some embodiments, when the receiving side detects signal flipping, if the sending side and the receiving side perform steps 601 to 606, the burst transmission includes the at least one first data unit and the second data unit indicating that the burst transmission ends, and data sampled by the receiving side in the burst transmission includes the first data collected from the at least one first data unit and the second data collected from the second data unit.

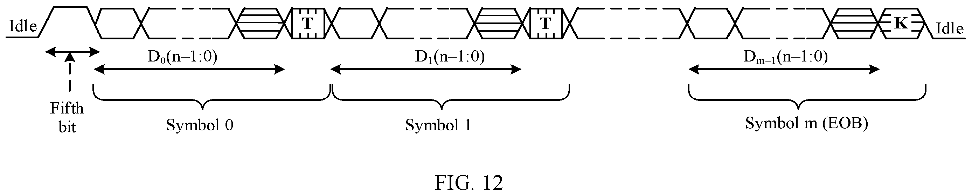

FIG. 12 is a transmission diagram of the burst transmission. Before the sending side transmits the burst transmission, it is assumed that the level of the lane of the link in the idle state is the low level. As shown in FIG. 12, the sending side first transmits the fifth bit, where a level of the fifth bit is the high level; and then transmits the symbol 0 after the fifth bit in time domain, where the symbol 0 is consecutive to the fifth bit. Similarly, as not shown in FIG. 12, if the level of the lane of the link in the idle state is the high level, the level of the fifth bit is the low level. In addition, as shown in FIG. 12, when the symbol m is an EOB, if each symbol includes $(n+1)$ bits, when sampling an $(n+1)^{\text{th}}$ bit (bit K) of the symbol m, the receiving side identifies that this burst transmission ends.

In this way, when the sending side sends the burst transmission, not only the bandwidth utilization can be improved to $n/(n+1)$, but also the idle state can be flipped by using the fourth data unit, to indicate the start of the burst transmission.

In some embodiments, if no data needs to be continuously sent after the EOB of the burst transmission, the lane of the link between the interfaces is recovered to the idle state.

In addition, in some embodiments of this application, the value of n may be fixed. For example, the value of n is 8 or another fixed value.

In some embodiments, the value of n may be set or configured based on a channel condition for transmitting a signal on the link between the interfaces. In a possible manner, the value of n is related to a clock cycle (or a sampling clock cycle) in which a 1-bit signal is received and sent and a maximum offset between receiving and sending clocks in each clock cycle.

For example, the value of n is a minimum integer that meets a relationship shown in Formula (1).

$$\text{n} \times \Delta \leq \tfrac{1}{2} T_{UI} \quad \text{Formula (1)}$$

Herein, $\Delta$ indicates a maximum offset between receiving and sending clocks in each clock cycle in each symbol, and $T_{UI}$ indicates a clock cycle (or a sampling clock cycle) in which a 1-bit signal is received and sent in each symbol.

In this way, in the calculation manner of Formula (1), it can be ensured that one time of bit flipping occurs in one symbol before a sampling deviation on the receiving side reaches $\tfrac{1}{2} T_{UI}$, to correct the sampling deviation through bit flipping.

For example, if a value of $T_{UI}$ is 800 nanoseconds (ns) and a value of $\Delta$ is 50 ns, a maximum value of n is 8. In this case, each symbol includes 9 bits, first 8 bits in the 9 bits in time domain are data bits, and a last bit is a flip bit (in a case of a data symbol) or has a same level as an $8^{\text{th}}$ bit (EOB symbol).

Therefore, in this application, a quantity of data bits of each symbol is determined based on the clock cycle (or the sampling clock cycle) in which a 1-bit signal is received and sent and the maximum offset between the receiving and sending clocks in each clock cycle, so that before the sampling deviation reaches the threshold (for example, $\frac{1}{2}T_{UI}$ ), the sampling deviation can be corrected in time through bit flipping, thereby improving data transmission efficiency of the link between the interfaces.

It may be understood that, to implement the functions in the foregoing embodiments, the sending side and the receiving side include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

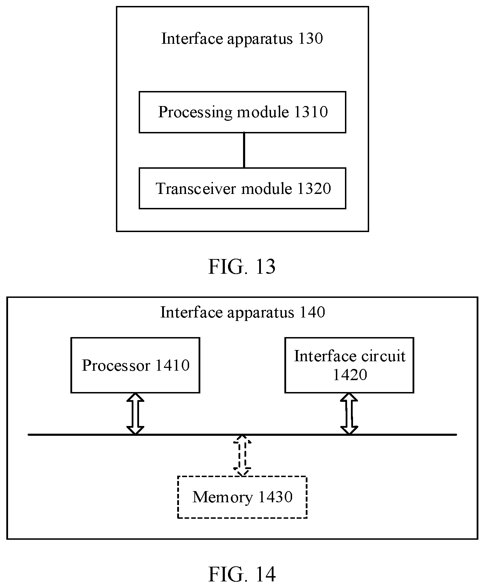

FIG. 13 and FIG. 14 are diagrams of structures of possible interface apparatuses according to embodiments of this application. These interface apparatuses may be configured to implement functions of the sending side or the receiving side in the foregoing method embodiments, and therefore can also implement beneficial effect of the foregoing method embodiments. In this embodiment of this application, the interface apparatus may be one of the device 1011 or the device 1021 shown in FIG. 1A and FIG. 1B, or may be one of the devices 103 to 106 shown in FIG. 1A and FIG. 1B, or may be the device shown in FIG. 2, or may be used in these device interface modules (for example, a chip or a chipset). The related interface apparatus is configured to implement a data transmission between interfaces, for example, may be configured to implement the foregoing UMI interface function.

As shown in FIG. 13, an interface apparatus 130 includes a processing module 1310 and a transceiver module 1320. The interface apparatus 130 is configured to implement a function of the sending side or the receiving side in the method embodiments shown in FIG. 6, FIG. 8, and FIG. 11.

When the interface apparatus 130 is configured to implement the function of the sending side in the method embodiments shown in FIG. 6, FIG. 8, and FIG. 11, the processing module 1310 may be configured to generate at least one first data unit, a second data unit, and a third data unit. Alternatively, the processing module 1310 may be configured to generate at least one first data unit and a fourth data unit. The transceiver module 1320 is configured to send the at least one first data unit, the second data unit, and the third data unit. Alternatively, the transceiver module 1320 may be configured to send the at least one first data unit and the fourth data unit.

When the interface apparatus 130 is configured to implement the function of the receiving side in the method embodiments shown in FIG. 6, FIG. 8, and FIG. 11, the transceiver module 1320 is configured to receive at least one first data unit, a second data unit, and a third data unit. Alternatively, the transceiver module 1320 may be configured to receive at least one first data unit and a fourth data unit. The processing module 1310 is configured to process the at least one first data unit to obtain first data, process the second data unit to obtain second data, and process the third data unit to obtain third data. Alternatively, the processing module 1310 may be configured to process the at least one first data unit to obtain first data, and process the fourth data unit to obtain fourth data.

For more detailed descriptions of the processing module 1310 and the transceiver module 1320, refer to the related descriptions in the method embodiments shown in FIG. 6, FIG. 8, and FIG. 11.

As shown in FIG. 14, an interface apparatus 140 includes a processor 1410 and an interface circuit 1420. The processor 1410 and the interface circuit 1420 are coupled to each other. It can be understood that the interface circuit 1420 may be a transceiver or an input/output interface. Optionally, the interface apparatus 140 may further include a memory 1430, configured to store instructions executed by the processor 1410, or store input data required by the processor 1410 to run the instructions, or store data generated after the processor 1410 runs the instructions.

When the interface apparatus 140 is configured to implement the methods shown in FIG. 6, FIG. 8, and FIG. 11, the processor 1410 is configured to implement a function of the processing module 1310, and the interface circuit 1420 is configured to implement a function of the transceiver module 1320. The interface circuit 1420 may be an interface chip, or may be an independent IP module integrated in the interface chip.

When the interface apparatus 140 is an interface chip used on a sending side, the interface chip on the sending side implements functions of the sending side in the foregoing method embodiments. That the interface chip on the sending side sends data to a receiving side may be understood as that the data is first generated by another module (for example, a source data component) on the sending side, and then sent by the module to the interface chip on the sending side.

When the interface apparatus 140 is an interface chip used on a receiving side, the interface chip on the receiving side implements functions of the receiving side in the foregoing method embodiments. That the interface chip on the receiving side receives data from a sending side may be understood as that the data is first received by the interface chip on the receiving side, and then sent to a data processing component on the receiving side by the interface chip on the receiving side.

In this application, that an entity A sends information to an entity B may be that A directly sends the information to B, or may be that A indirectly sends the information to B through another entity. Similarly, that the entity B receives the information from the entity A may be that the entity B directly receives the information sent by the entity A, or may be that the entity B indirectly receives the information sent by the entity A through another entity.

The entities A and B herein may be a sending side and a receiving side, or may be modules inside the sending side and the receiving side. Data sending and receiving may be information exchange between the sending side and the receiving side, for example, information exchange between a source device and a sink device. Data sending and receiving may alternatively be information exchange between different modules in an apparatus, for example, information exchange between an interface chip on the sending side and an interface chip on the receiving side.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When software is used for implementation, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions of different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In text descriptions of this application, the character "/" generally indicates an "or" relationship between associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A data transmission method for an interface, comprising:

   generating at least one first data unit, wherein the at least one first data unit is consecutive in time domain, each first data unit in the at least one first data unit comprises n first data bits and a first bit, n is an integer greater than or equal to 1, the first bit is located after the n first data bits in time domain, and a value of the first bit is opposite to a value of an $n^{th}$ first data bit in the n first data bits; and

sending the at least one first data unit.

2. The method according to claim 1, wherein the method further comprises:

generating a second data unit; and
sending the second data unit, wherein the second data unit is located after the at least one first data unit in time domain and indicates that one burst transmission ends, wherein
the second data unit comprises n second data bits and a second bit, the second bit is located after the n second data bits in time domain, and a value of the second bit is the same as a value of an $n^{th}$ second data bit in the n second data bits.

3. The method according to claim 2, wherein both the at least one first data unit and the second data unit are data units belonging to the burst transmission.

4. The method according to any one of claims 1 to 3, wherein the method further comprises:

generating a third data unit; and
sending the third data unit, wherein the third data unit is located before the at least one first data unit in time domain and indicates that the burst transmission starts, wherein
the third data unit comprises (n+1) third bits and a fourth bit, the fourth bit is located after the (n+1) third bits in time domain, and a value of the fourth bit is opposite to values of the (n+1) third bits.

5. The method according to claim 4, wherein both the first data unit and the third data unit are data units belonging to the burst transmission.

6. The method according to any one of claims 1 to 3, wherein the method further comprises:

generating a fourth data unit; and
sending the fourth data unit, wherein the fourth data unit comprises a fifth bit, the fourth data unit is located before the at least one first data unit in time domain and indicates that the burst transmission starts, a value of the fifth bit is opposite to a value of a bit indicating an idle state, and the at least one first data unit is a data unit belonging to the burst transmission.

7. A data transmission method for an interface, comprising:

receiving at least one first data unit, wherein the at least one first data unit is consecutive in time domain, each first data unit in the at least one first data unit comprises n first data bits and a first bit, n is an integer greater than or equal to 1, the first bit is located after the n first data bits in time domain, and a value of the first bit is opposite to a value of an $n^{th}$ first data bit in the n first data bits; and

processing the at least one first data unit to obtain first data.

8. The method according to claim 7, wherein the method further comprises:

receiving a second data unit, wherein the second data unit is located after the at least one first data unit in time domain and indicates that one burst transmission ends, wherein
the second data unit comprises n second data bits and a second bit, the second bit is located after the n second data bits in time domain, and a value of the second bit is the same as a value of an $n^{th}$ second data bit in the n second data bits; and
processing the second data unit to obtain second data.

9. The method according to claim 8, wherein the first data and the second data are data belonging to the burst transmission.

10. The method according to any one of claims 7 to 9, wherein before receiving the at least one first data unit, the method further comprises:

receiving a third data unit, wherein the third data unit is located before the at least one first data unit in time domain and indicates that the burst transmission starts, wherein
the third data unit comprises (n+1) third bits and a fourth bit, the fourth bit is located after the (n+1) third bits in time domain, and a value of the fourth bit is opposite to values of the (n+1) third bits; and
processing the third data unit to obtain third data.

11. The method according to claim 10, wherein the first data and the third data are data belonging to the burst transmission.

12. The method according to any one of claims 7 to 9, wherein the method further comprises:
receiving a fourth data unit, wherein the fourth data unit comprises a fifth bit, the fourth data unit is located before the at least one first data unit in time domain and indicates that the burst transmission starts, a value of the fifth bit is opposite to a value of a bit indicating an idle state, and the at least one first data unit is a data unit belonging to the burst transmission.

13. An interface apparatus, wherein the interface apparatus comprises:

a processing module, configured to generate at least one first data unit, wherein the at least one first data unit is consecutive in time domain, each first data unit in the at least one first data unit comprises n first data bits and a first bit, n is an integer greater than or equal to 1, the first bit is located after the n first data bits in time domain, and a value of the first bit is opposite to a value of an $n^{th}$ first data bit in the n first data bits; and a sending module, configured to send the at least one first data unit.

14. An interface apparatus, wherein the interface apparatus comprises:

a receiving module, configured receive at least one first data unit, wherein the at least one first data unit is consecutive in time domain, each first data unit in the at least one first data unit comprises n first data bits and a first bit, n is an integer greater than or equal to 1, the first bit is located after the n first data bits in time domain, and a value of the first bit is opposite to a value of an $n^{th}$ first data bit in the n first data bits; and a processing module, configured to process the at least one first data unit to obtain first data.

15. An interface apparatus, comprising a module configured to perform the method according to any one of claims 1 to 12.

16. An interface apparatus, wherein the interface apparatus comprises a processor and a memory, the memory is configured to store computer-executable instructions, and when the computer-executable instructions are run by the processor, the method according to any one of claims 1 to 12 is performed.

17. A computer-readable storage medium, wherein the computer-readable storage medium stores computer instructions, and when the computer instructions are run on an interface apparatus, the interface apparatus is enabled to perform the method according to any one of claims 1 to 12.

18. A computer program product, comprising computer instructions, wherein when the computer instructions are run on an interface apparatus, the interface apparatus is enabled to perform the method according to any one of claims 1 to 12.

10a

1011

101

102

1021

## FIG. 1A

10b

103

106

105

104

## FIG. 1B

20

External
component

Management
and control

External
component

200

Adapter

Management and
control adapter

Adapter

201

202

203

Port

Connector

204

Interface chip

Adapter

Adapter

External
component

External
component

FIG. 2

Uplink port

Main link

Downlink port

Sideband link

Powerbus link

Cable information link

FIG. 3

FIG. 4

FIG. 5

FIG. 6

Bit 0    Bit (n–1)  First bit (bit n)

$D_0(n-1{:}0)$       $D_1(n-1{:}0)$       $D_{m-1}(n-1{:}0)$

Symbol 0       Symbol 1       Symbol (m–1)

FIG. 7

```
┌──────────┐                                                    ┌──────────┐
│ Sending  │                                                    │Receiving │
│   side   │                                                    │   side   │
└──────────┘                                                    └──────────┘
```

607: Generate a third data unit, where the third data unit includes a third bit and a fourth bit, the fourth bit is located after the third bit in time domain, and a value of the fourth bit is opposite to a value of the third bit

608: Send the third data unit, where the third data unit is located before at least one first data unit in time domain and indicates that one burst transmission starts

609: Process the third data unit to obtain third data

601: Generate the at least one first data unit, where the at least one first data unit is consecutive in time domain, each first data unit in the at least one first data unit includes n first data bits and a first bit, n is an integer greater than or equal to 1, the first bit is located after the n first data bits in time domain, and a value of the first bit is opposite to a value of an $n^{th}$ first data bit in the n first data bits

602: Send the at least one first data unit

603: Process the at least one first data unit to obtain first data

604: Generate a second data unit, where the second data unit includes n second data bits and a second bit, the second bit is located after the n second data bits in time domain, and a value of the second bit is the same as a value of an $n^{th}$ second data bit in the n second data bits

605: Send the second data unit, where the second data unit is located after the at least one first data unit in time domain and indicates that the burst transmission ends

606: Process the second data unit to obtain second data

FIG. 8

Idle — Fourth bit — Bit 0 — Bit (n−1) — First bit (bit n) — Idle

$D_{SOB}(n-1:0)$

$D_0(n-1:0)$

$D_{m-1}(n-1:0)$

$D_m(n-1:0)$

SOB

Symbol 0

Symbol (m−1)

Symbol m (EOB)

FIG. 9A

Fourth bit    Bit 0    Bit (n−1)    First bit (bit n)

Idle    Idle

$D_{SOB}(n:0)$    $D_0(n−1:0)$    $D_{m−1}(n−1:0)$    $D_m(n−1:0)$

SOB    Symbol 0    Symbol (m−1)    Symbol m (EOB)

FIG. 9B

FIG. 10

```
┌──────────┐                                                          ┌──────────┐
│ Sending  │                                                          │Receiving │
│  side    │                                                          │  side    │
└──────────┘                                                          └──────────┘
```

111: Generate a fourth data unit, where the fourth data unit includes a fifth bit, the fourth data unit is located before at least one first data unit in time domain, a value of the fifth bit is opposite to a value of a bit indicating an idle state, and the at least one first data unit is a data unit belonging to one burst transmission

112: Send the fourth data unit

113: Identify a start of the burst transmission based on the fourth data unit

601: Generate the at least one first data unit, where the at least one first data unit is consecutive in time domain, each first data unit in the at least one first data unit includes n first data bits and a first bit, n is an integer greater than or equal to 1, the first bit is located after the n first data bits in time domain, and a value of the first bit is opposite to a value of an $n^{th}$ first data bit in the n first data bits

602: Send the at least one first data unit

603: Process the at least one first data unit to obtain first data

604: Generate a second data unit, where the second data unit includes n second data bits and a second bit, the second bit is located after the n second data bits in time domain, and a value of the second bit is the same as a value of an $n^{th}$ second data bit in the n second data bits

605: Send the second data unit, where the second data unit is located after the at least one first data unit in time domain and indicates that the burst transmission ends

606: Process the second data unit to obtain second data

FIG. 11

FIG. 12

Interface apparatus 130

Processing module 1310

Transceiver module 1320

FIG. 13

Interface apparatus 140

Processor 1410

Interface circuit 1420

Memory 1430

FIG. 14

## INTERNATIONAL SEARCH REPORT

| International application No. |
|---|
| **PCT/CN2024/097084** |

**A. CLASSIFICATION OF SUBJECT MATTER**

H04L1/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE, 3GPP: 比特, 数据位, 取值, 相反, 翻转, 取反, 结尾, 结束, 停止, bit, value, reverse, flip, negate, end, stop

**C. DOCUMENTS CONSIDERED TO BE RELEVANT**

| Category* | Citation of document, with indication, where appropriate, of the relevant passages | Relevant to claim No. |
|---|---|---|
| PX | CN 118413293 A (HUAWEI TECHNOLOGIES CO., LTD.) 30 July 2024 (2024-07-30) description, paragraphs [0005]-[0179], and figures 1-14 | 1-18 |
| X | CN 107359963 A (TENDYRON CORP.) 17 November 2017 (2017-11-17) description, paragraphs [0002]-[0182], and figures 1-12 | 1-18 |
| X | CN 107404366 A (TENDYRON CORP.) 28 November 2017 (2017-11-28) description, paragraphs [0004]-[0125], and figures 1-10 | 1-18 |
| A | CN 101018179 A (KTK GROUP CO., LTD. et al.) 15 August 2007 (2007-08-15) entire document | 1-18 |
| A | CN 105224485 A (LIU BOAN) 06 January 2016 (2016-01-06) entire document | 1-18 |
| A | US 11424859 B2 (HEWLETT PACKARD ENTERPRISE DEVELOPMENT LP) 23 August 2022 (2022-08-23) entire document | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 August 2024** | **16 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097084**

| Patent document cited in search report | | | Publication date (day/month/year) | Patent family member(s) | | | Publication date (day/month/year) |
|---|---|---|---|---|---|---|---|
| CN | 118413293 | A | 30 July 2024 | None | | | |
| CN | 107359963 | A | 17 November 2017 | CN | 107359963 | B | 31 December 2019 |
| CN | 107404366 | A | 28 November 2017 | CN | 107404366 | B | 31 December 2019 |
| CN | 101018179 | A | 15 August 2007 | CN | 100471156 | C | 18 March 2009 |
| CN | 105224485 | A | 06 January 2016 | CN | 105224485 | B | 07 May 2019 |
| US | 11424859 | B2 | 23 August 2022 | US | 2022123860 | A1 | 21 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311300982

- CN 202410291171